# EUROPEAN PATENT SPECIFICATION

(11) **EP 0 781 807 B1**
(45) Date of publication and mention of the grant of the patent: **04.06.2003**
(21) Application number: 96120982.2
(22) Date of filing: 30.12.1996
(51) Int. Cl.: C08L 3/02, C08L 101/00, B29C 47/40

(54) **Biodegradable composition, a process and equipment for preparing the same**
Bioabbaubare Zusammensetzung, Verfahren und Einrichtung zu ihrer Herstellung
Composition biodégradable, procédé et équipement pour la préparer

(30) Priority: 29.12.1995 CN 95121178
(43) Date of publication of application: 02.07.1997
(73) Proprietor: BEIJING XINGCHEN MODERN CONTROL ENGINEERING INSTITUTE, Haidian District, Beijing 100081 (CN)
(72) Inventor: Li, Anhua, Beijing Xingchen Modern Con. Eng. Inst., Haidian District, Beijing 100081 (JP)
(74) Representative: Goddar, Heinz J., Dr.

(56) References cited:
- EP-A- 0 327 505
- EP-A- 0 409 788
- WO-A-90/14388
- DE-A- 1 604 396
- GB-A- 2 272 700
- US-A- 4 016 117
- "L'extrudeuse bi-vis Clextral: une technologie de base multi-fonctions" CAOUTCHOUCS ET ELASTIQUES, vol. 65, no. 675, 1988, FR, pages 81-83, XP002053055

## Description

### FIELD OF THE INVENTION

The present invention relates to a biodegradable starch resin composition, a process and apparatus for preparing the same.

### BACKGROUND OF THE INVENTION

As we know, with the rapid development of the plastics industry, the plastics have almost gone into every aspect of our life. At the same time, the harm of plastic rubbish to human becomes more and more serious. This is because that the plastic rubbish left in the nature will take about 200 years to be degraded. The environmental pollution caused by plastics has drawn extensive attentions to the government and the field of science and technology of each country all over the world.

Among the numerous ways to eliminate said pollution, the feasible but extremely difficult method is to manage to blend natural products with synthetic resins, wherein the natural products provide the biodegradability, whereas the synthetic resins provide various mechanical and processing properties required during the application. The natural products often used are starch, cellulose and other polysaccharide and the derivatives thereof. The synthetic resins can be polyethylene, polypropylene, polystyrene, polyester, polyether, polyacrylates and special rubbers, etc.. Starch is widely used because of its wide source and low cost. The processes for the preparation of degradable starch resin composition using starch and synthetic resins can further be classified into three types: one is to prepare said degradable starch resins by using starch, hydrophilic synthetic resins such as polyvinyl alcohol and a copolymer of ethylene and ethenol and other additives, for example WO9102023. Such resins prepared thereby have good biodegradability but poor water resistance. The property of the products is largely influenced by environmental moisture, and the processing property is also poor. The second one is to prepare said biodegradable starch resins by treating dry starch with organosilicon compounds and titanate, converting starch from hydrophilic material into hydrophobic material, followed by blending with synthetic resins. This process is simple and the processing techniques and equipment for the product can be those as used during the processing of synthetic resins. However, the starch content in the final product is only in the range of 6-16%. In most case the starch content in the final product is below 10%. When the starch content is high, the product could not be used because of the poor mechanical property, when the starch content is low, the degradability is very poor. The third process is to prepare said degradable starch resins by mixing starch, polyethylene, mixing promoter(EAA) and plasticizer and the like, dextrinizing starch in the presence of outside water, blending it with polyethylene and EAA, and extruding and pelleting after the removal of additional water. The characteristic of this process is that the dextrinizing and blending of the starch is completed simultaneously and it makes possible to the application of wet starch, for example EP0409789A2. However, the starch content in the degradable starch resins produced by this process is not high, and when the starch content is higher than 12%, the mechanical property of the products is poor and largely influenced by moisture. Thinner films could not be obtained when blowing, and the transparency is not good. It has been demonstrated by study that the film obtained by such process has a thickness of more than 50µm, it will soon become fragile upon the storage under dry environment, the elongation drops abruptly and the thermal fusion property is bad. It has been found under the observation of electronic microscope that the grain size of starch dispersed in polyethylene is in the range of 30-50µm, and the dispersity is poor and extremely uneven. Starch is a strong polar macromolecular material, there are many polar hydroxy groups in the molecule, while polyvinyl resin is non-polar polymer, therefore the critical point for preparing the degradable starch resins is to improve the compatibility between starch and polyvinyl resins. Furthermore, when such blend is manufactured into products, it is likely to appear pores during blowing as a result of the different rheological properties of starch and synthetic resins. In prior art, it mainly use a copolymer of ethylene and acrylic acid(EAA) as a mixing promoter. However, it is indicated by research that EAA is only partly compatible with starch and their mixing substantially belongs to physical mixing when the blending means is not good. Additionally, the applied water which is added to dextrinize starch actually functions to separate polyvinyl resin and starch. Therefore, it affects the dispersion of starch in polyvinyl resin. After the water content in starch is volatiled, the starch will recrystallize, making the grain size of dispersed starch too large which in turn affects the thickness and strength of the film and restrains the amount of starch.

In EP patents, starch with small grain size can be obtained by first reducing the grain size of starch through the action of microbes or enzymes, then emulsifying with vegetable oil, coating and spray drying. The addition amount of starch is therefore increased, but the process is very complicated. Actually among many techniques disclosed heretofore, when the starch content is higher than 20%, the mechanical property of the product is much worse as compared with that of plastics, hence it is difficult to produce film products having practical value.

Therefore, in prior art, biodegradable resin composition, especially degradable starch resin composition with low cost, good biodegradability and good applying property has not been obtained yet.

### OBJECTS OF THE INVENTION

Therefore, one object of the present invention is to provide a biodegradable starch resin composition with high starch content, good biodegradability and good applying property.

Another object of the present invention is to provide a process for the preparation of said biodegradable starch resin composition.

A further object of the present invention is to provide an equipment for preparing said biodegradable starch resin composition.

### SUMMARY OF THE INVENTION

According to one aspect of the invention, there provides a biodegradable starch resin composition, obtainable by a process comprising the steps of:
(1) preparing a mixture comprising 3-5 % by weight of self-oxidant, 3-8 % by weight of polyols, 0-1 % by weight of alkaline additive, and 0-2 % by weight of surfactant, controlling the pH value of the mixture in the range of 10-12.5; and
(2) through a metering pump and a loss-weight metering feeder, adding the mixture obtained in step (1) and 25-75 % by weight of starch, 10-45 % by weight of synthetic resin, 0-15 % by weight of mixing promoter and 1-2 % by weight of splitting agent into a double-screw extruder comprising screw blocks under such conditions that the rotating rate of the screw is in the range of 100-600 rpm and the torsional moment is in the range of 432-4042 Nm, the mixture passing through a feeding area at a temperature of 90-145 °C, a melting-blending area at a temperature in the range 120-165 °C, a blending-shearing area at temperature in the range of 130-190 °C, a blending-kneading area at a temperature in the range of 120-180 °C, a plasticizing-propelling area at a temperature in the range of 110-170 °C and a pressure-increasing extruding area at a temperature in the range of 110-180 °C of the double-screw extruder.

According to another aspect of the invention, there provides a process for the preparation of the biodegradable starch resin composition, comprising the steps of:
(1) mixing self-oxidant, polyols, alkaline additive and surfactant, controlling the pH value of the obtained mixture in the range of 10-12.5;
(2) through a metering pump and a loss-weight metering feeder, adding the mixture obtained in step(1), starch, synthetic resin, mixing promoter and splitting agent into a double-screw extruder comprising screw blocks under such conditions as that the rotating speed of the screw is in the range of 100-600rpm and the torsional moment is in the range of 432-4042 Nm; the mixture in the extruder being delivered, dispersed, converged, heating melted, sheared into pieces, pressing kneaded, grafting blended, unloaded volatiles, densified and extruded under increasing pressure respectively in a feeding area, a melting-blending area, a blending-shearing area, a blending-kneading area, a plasticizing-propelling area and a pressure-increasing extruding area of the double-screw extruder, wherein the temperature of the feeding area is in the range of 90-145°C, the temperature of the melting-blending area is in the range of 120-165°C, the temperature of the blending-shearing area is in the range of 130-190°C, the temperature of the blending-kneading area is in the range of 120-180°C, the temperature of the plasticizing-propelling area is in the range of 110-170°C, the temperature of the pressure-increasing extruding area is in the range of 110-180°C.

According to a further aspect of the invention, there provides an equipment for preparing the biodegradable starch resin composition, comprising a high-speed mixer, a loss-weightt metering feeder, a controlling system, a double-screw extruder and a pelleting apparatus, wherein said double-screw extruder comprises two screws rotating in the same direction, said screw consists of a mandrel with several tooth-type involute and a plurality of screw blocks and a plurality of kneading blocks, characterized in that a feeding area, a melting-blending area, a blending-shearing area, a blending-kneading area, a plasticizing-propelling area and a pressure-increasing extruding area are successively formed along with the mandrel of said screws, wherein said feeding area and pressure-increasing area include a plurality of screw blocks, said melting-blending area, blending-shearing area, blending-kneading area and plasticizing-propelling area include a plurality of kneading blocks and a few screw blocks. In each area mentioned above, the angle between the adjacent kneading blocks is larger than 0. The ratio of length to diameter of said screw is in the range of 44-48:1.

### THE BRIEF DESCRIPTION OF THE DRAWINGS

Figure 1 shows a sketch of the structure of the screw of the double-screw extruder of the invention.
Figure 2 is an electronic microscope photo of the film prepared with the degradable starch resin composition of the invention, magnification times is 500.
Figure 3 is an electronic microscope photo of the film prepared with the degradable starch resin composition of the invention, magnification times is 3000.
Figure 4 is an electronic microscope photo of the film prepared with the degradable starch resin composition of the invention, magnification times is 10000.
Figure 5 is an electronic microscope photo of the film prepared with the degradable starch resin composition of the invention, magnification times is 30000.

### DETAILED DESCRIPTION OF THE INVENTION

Specifically, the invention relates to a biodegradable starch resin composition, obtainable by a process comprising the steps of:
(1) preparing a mixture comprising 3-5 % by weight of self-oxidant, 3-8 % by weight of polyols, 0-1 % by weight of alkaline additive, and 0-2 % by weight of surfactant, controlling the pH value of the mixture in the range of 10-12.5; and
(2) through a metering pump and a loss-weight metering feeder, adding the mixture obtained in step (1) and 25-75 % by weight of starch, 10-45 % by weight of synthetic resin, 0-15 % by weight of mixing promoter and 1-2 % by weight of splitting agent into a double-screw extruder comprising screw blocks under such conditions that the rotating rate of the screw is in the range of 100-600 rpm and the torsional moment is in the range of 432-4042 Nm, the mixture passing through a feeding area at a temperature of 90-145 °C, a melting-blending area at a temperature in the range 120-165 °C, a blending-shearing area at temperature in the range of 130-190 °C, a blending-kneading area at a temperature in the range of 120-180 °C, a plasticizing-propelling area at a temperature in the range of 110-170 °C and a pressure-increasing extruding area at a temperature in the range of 110-180 °C of the double-screw extruder.

According to the invention, said starch is the normal industrial starch of which the grain size is larger than 100 mesh, including corn starch, potato starch, sweet potato starch, cassava starch and the like, and the modified starch, wherein the starch with high amylose content is preferable.

According to the invention, said synthetic resins are polyethylene and polypropylene, such as PE, PP, LDPE and LLDPE, polystyrene such as PS, HiPS and SBS, polyvinyl acetate and the copolymer thereof, such as PVAC and EVAC, and/or a polyvinyl resin with a density of 0.86-0.90g/cm³ and a melt index of 2-8g/10minutes.

According to the invention, said mixing promoter is a copolymer of ethylene and acrylic acid(EAA), wherein the acrylic acid content thereof is in the range of 5-20% and the melt index is in the range of 35±5g/10minutes.

According to the invention, said self-oxidant is selected from the group consisting of organic acids such as oleic acid, stearic acid and citric acid, and oils such as corn oil, epoxy vegetable oil and soybean oil. Self-oxidant can separately react with starch and synthetic resins by affinity, thus improving the compatibility of starch and synthetic resins, and also promoting the chain rupture of the synthetic resins by its self-oxidizing property and thus providing another degradation method.

According to the invention, said polyols is glycol, glycerin, sorbitol and the low molecular weight condensate thereof(MW<400), of which the function is to plasticize, to hold water and to act as dispersion agent.

According to the invention, said alkaline additive is sodium hydroxide, ammonium hydroxide, urea, triethanolamine and the like, of which the function is to reduce the melting temperature of the starch and to lower the grain size of the starch further.

According to the invention, said surfactant can be ionic surfactant and non-ionic surfactant, wherein the ionic surfactant is alkyl sulfonates and alkylbenzene sulfonates, and the non-ionic surfactant is fatty acid polyoxyethylene esters and alkylphenol polyoxyethylene ethers.

According to the invention, said splitting agent is the organic complex of ferric salts of organic acid and iron, methyl vinyl ketone, diphenyl ketone, ferrocene and its derivatives, ferric dithiocarbamic acid and its derivatives, and calcium carbonate.

Depending on the property and type of the products, processing aids known in the art such as lubricating agent, eg. calcium stearate, zinc stearate and talcum powder, foaming agent and cross linking agent can also be added into the particles of the composition of the invention.

In prior art, mixing promoter such as EAA is usually used to improve the blending of starch and synthetic resins. However, the function style of mixing promoter and the conditions and degree of the blending have not been known really. So far, satisfying and true-type biodegradable resin products have not been obtained yet.

The inventor has done deeply textual research on the physical and chemical functions of mixing promoter, and calculated by means of quantum mechanics and quantum chemistry the intermolecular force between mixing promoter and various kinds of hydrocarbon resin and substituted carbon chain macropolymer, and also the hydrogen bond force between mixing promoter and starch under the conditions of given distance and given surface area in the Van der Waals Space. The inventor has also obtained by means of mechanical dynamics, thermodynamics, fluid dynamics and material mechanics the central distance and the grain size of fined matrix, the torsional moment of the blending screw, the rotating speed of the screw, the retaining function of the material in the cylinder, the grouping of the rotational energy of the screw blocks and the processing temperatures in every step, the rotating speed and the achieved power of the electric machine, etc.. By such effectively designed model quantified in mathematics and physics, another kind of mixing promoter including a kind of organic acid and organic acid ester with polar groups(hydroxyl and ester group) as well as with non-polar groups(alkyl), eg. stearic acid, corn oil, epoxy soybean oil and oleic acid, is also used in the present invention. The inventor has also calculated by the same method the intermolecular force and hydrogen bond force of the different particles inlaying at both ends. In the invention, it is preferable to use the mixing promoter with the characteristic of self-oxidation. Alternatively self-oxidant is directly used in the invention. especially those thermo-antioxidants such as the complex compounds of various transitional metals, the organic salts of metals, ferrocene and its derivatives, ferric dithiocarbamic acid and its derivatives, etc., as long as their intermolecular force is strong enough to abstract hydrogen atom from the hydrocarbon chain after self-oxidation to cause the chain rupture of the hydrocarbon high polymer and the decreasing of its molecular weight to the level less than 4500, so that the hydrocarbon high polymer can be degraded by microbes.

The invention has improved the compatibility between starch and polyvinyl resins in two aspects, and it also causes the fluidities of the starch particles and polyvinyl resins becoming compatible. These two aspects are: (1) in addition to EAA, the organic self-oxidant which can react with starch and synthetic resins is added, therefore, another way of coupling and biodegradation is found. Moreover, in the absence of applied water, the starch is converted from crystalline form into amorphous form, and recrystallizing is prevented by adding additives. Therefore it is thermoplastic modified starch particles that are obtained by the conversion under high temperature and high pressure in the cylinder of the extruder. Such particles have good compatibility with polyvinyl resins and the optimal rheological properties match under the processing condition can be obtained by controlling the proportion and technical conditions. (2) The above-mentioned special polyvinyl resin has been used in the invention. This polyvinyl resin has longer molecular chain with a low content of branches, low crystallinity and good rheological properties. The specialty of its molecular chain makes the polyvinyl resin easy to form good dispersion system with starch particles. Therefore, starch is likely to disperse well in it. It is the first time for the present invention to use such kind of polyvinyl resin, and a good result has been achieved.

Splitting agent is also added into the starch resin composition of the invention. The splitting agent combines with synthetic resins by affinity. When the products made of the composition are disposed or buried in a suitable environment, the chain rupture and the degradation of the synthetic resin will be accelerated automatically as a result of the free radicals produced by oxidizing and decomposing of the splitting agent, thus accelerating the procedure of biodegradation and greatly increasing the rate of degradation.

It is indicated by research work that when starch is heated under normal pressure, it will carbonize because of the dehydration among molecules. Therefore, starch does not possess thermoplasticity under normal conditions. However, when starch is heated under high pressure, the crystalline structure of starch which has aids and a natural water content(10-15%) will be damaged, and it will become a melt and thus has thermoplasticity. In the present invention, in order to improve the compatibility of starch and non-polar synthetic polymers and to lower the grain size of starch in the composition, an organic plasticizer, oleic acid, epoxy vegetable oils and other additives are added, and thus modified starch is obtained by treating under high temperature and high pressure.

The starch resin composition of the invention can be employed to produce products for various uses, for example the products manufactured by blowing, injection molding, absorption molding and bubbling. The difference is to select different types of starch(eg. amylopectin, amylose or normal starch, modified starch, etc.) and different types of synthetic resins and additives(eg. mixing promoters, plasticizers, surfactants, self-oxidants, splitting agents, etc.) according to the different types of the products.

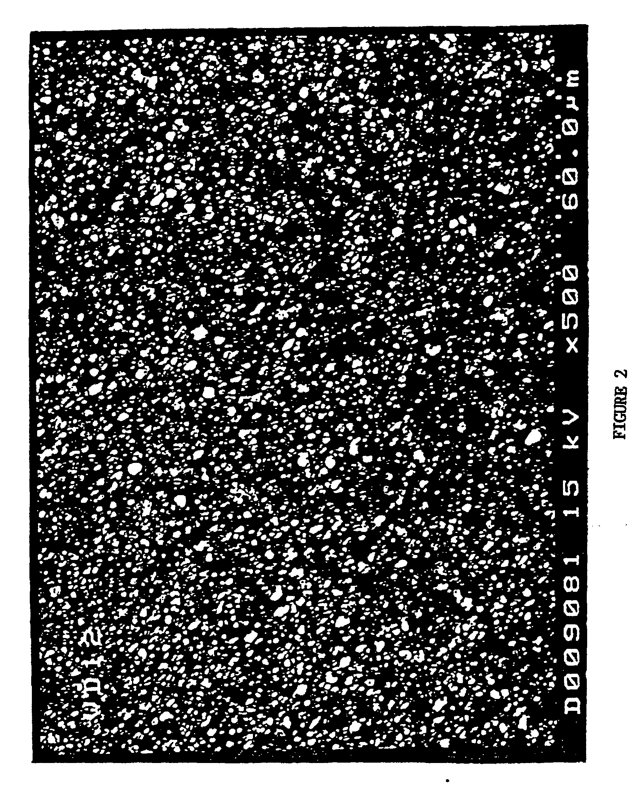

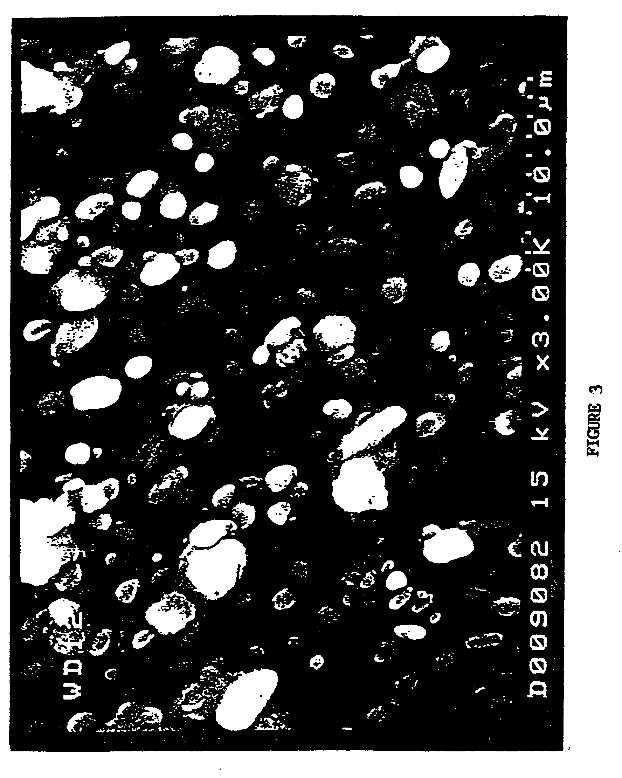

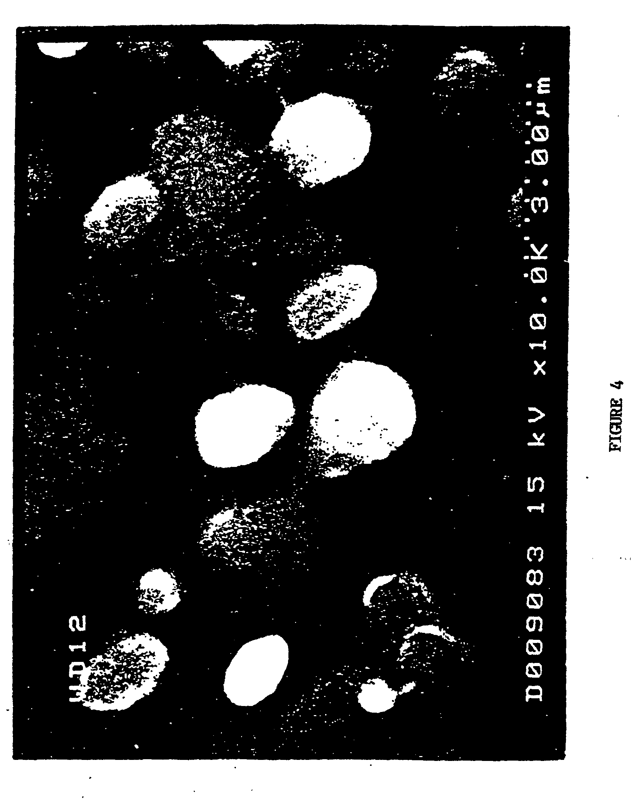

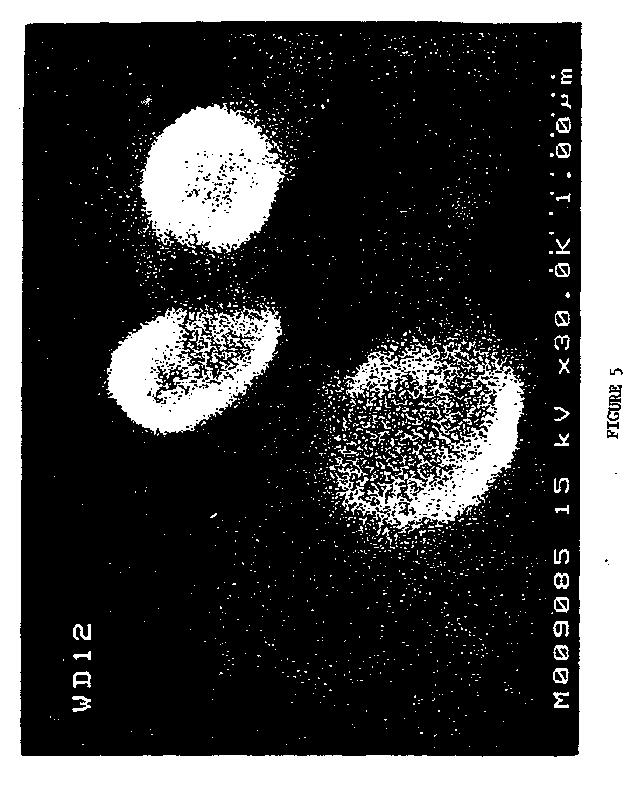

Figures 2 to 5 are photographs taken by electronic microscope of the thin films prepared by the degradable starch resin composition of the invention with different magnification times. Figure 2 is a photograph with a magnification times of 500, wherein the black background is basic film structured by PE and additives, and the white dots are corn starch particles which distribute randomly and well in the basic film. The real size represented by the photograph is 0.221mm. Figure 3 is a photograph with a magnification times of 3000, wherein the white dots of different brightness indicate different depth at which starch particles distribute in the basic film. The real size represented by the photograph is 0.037mm. Figure 4 is a photograph with a magnification times of 10000. As can be seen from the photograph, except that a minority of the starch particles is in the shape of granules, most of them has been fined into flocent shape, and interweaved with the adjacent PE and additives to form a net structure. The real size represented by the photograph is 0.011mm. Figure 5 is a photograph with a magnification times of 30000. We can see from the photograph the flocent-shape structure at the edge of the starch particles which indicates that the starch permeates and interweaves with PE and additives each other to form a thin film. The largest size of the starch particles which has been calculated on the basis of the photograph is 1µm, however the average size of the raw material of starch particles is 19µm, therefore, the starch particles have been fined 19 times as small as the original through mixing and plasticizing in the double-screw extuder of the invention, so as to make it mix well with resins to form the composition.

The biodegradable rein composition of the invention has the following advantages:
(a) It has high starch content. The addition amount of the starch is up to 30-75%, which can not be achieved by other techniques.
(b) It is easy to be molded. It can be blown, injection molded, absorption molded and bubbled by conventional equipments and the techniques are easy to be controlled. Since it has solved the problem of the matching of the rheological property of the starch with that of polyvinyl resins and the compatibility of starch and resins, and at the same time the moisture(water content) of the blending copolymer has been strictly controlled by the vaccum apparatus of the double-screw extruder so as to eliminate the affect of moisture, therefore, bubbles will not appear during blowing, homogeneous films with a thickness of 0.0044mm can be obtained. The films have good thermal fusion property and storage stability.
(c) It has good mechanical property. Its physico-mechanical property is similar to that of relevant resins.
(d) It has good degradability. The product has excellently comprehensive degradablity because of the photodegradation and biodegradation as a result of high starch content and high proportion of other degradable additives as well as the addition of self-oxidant and splitting agent.
(e) Since each component disperses well, after the starch and part of the synthetic resins are degraded. the remaining material turn into small particles of which the diameter is within 1µm. Therefore, the remains will increase the air permeability of soil instead of damaging the capillarity of soil.

According to another aspect of the invention, there provides a process for the preparation of the biodegradable starch resin composition, comprising the steps of:
(1) mixing self-oxidant, polyols, alkaline additive and surfactant, controlling the pH value of the obtained mixture in the range of 10-12.5;
(2) through a metering pump and a loss-weight metering feeder, adding the mixture obtained in step(1), starch, synthetic resin, mixing promoter and splitting agent into a double-screw extruder comprising screw blocks under such conditions as that the rotating rate of the screw is in the range of 100-600rpm and the torsional moment is in the range of 432-4042 Nm; the mixture in the extruder being delivered, dispersed, converged, heating melted, sheared into pieces, pressing kneaded, grafting blended, unloaded volatiles, densified and extruded under increasing pressure respectively in a feeding area, a melting-blending area, a blending-shearing area, a blending-kneading area, a plasticizing-propelling area and a pressure-increasing extruding area of the double-screw extruder, wherein the temperature of the feeding area is in the range of 90-145°C, the temperature of the melting-blending area is in the range of 120-165°C, the temperature of the blending-shearing area is in the range of 130-190°C, the temperature of the blending-kneading area is in the range of 120-180°C, the temperature of the plasticizing-propelling area is in the range of 110-170°C, the temperature of the pressure-increasing extruding area is in the range of 110-180°C.

According to the process of the invention, said starch is the normal industrial starch of which the grain size is larger than 100 mesh, including corn starch, potato starch, sweet potato starch, cassava starch and the like, and the modified starch, wherein the starch with high amylose content is preferable.

According to the process of the invention, said synthetic resins are polyethylene and polypropylene, such as PE, PP, LDPE and LLDPE; polystyrene such as PS, HiPS and SBS, polyvinyl acetate and the copolymer thereof, such as PVAC and EVAC, and/or a polyvinyl resin with a density of 0.86-0.90g/cm³ and a melt index of 2-8g/10minutes.

According to the process of the invention, said mixing promoter is a copolymer of ethylene and acrylic acid(EAA), wherein the acrylic acid content thereof is in the range of 5-20% and the melt index is in the range of 35±5g/10minutes.

According to the process of the invention, said self-oxidant is selected from the group consisting of organic acids such as oleic acid, stearic acid and citric acid, and oils such as corn oil, epoxy vegetable oil and soybean oil. Self-oxidant can separately react with starch and synthetic resins by affinity, thus improving the compatibility of starch and synthetic resins, and also promoting the chain rupture of the synthetic resins by its self-oxidizing property and thus providing another degradation method.

According to the process of the invention, said polyols is glycol, glycerin, sorbitol and the low molecular weight condensate thereof(MW<400), of which the function is to plasticize, to hold water and to act as dispersion agent.

According to the process of the invention, said alkaline additive is sodium hydroxide, ammonium hydroxide, urea, triethanolamine and the like, of which the function is to reduce the melting temperature of the starch and to lower the grain size of the starch further.

According to the process of the invention, said surfactant can be ionic surfactant and non-ionic surfactant, wherein the ionic surfactant is alkyl sulfonates and alkylbenzene sulfonates, and the non-ionic surfactant is fatty acid polyoxyethylene esters and alkylphenol polyoxyethylene ethers.

According to the process of the invention, said splitting agent is the organic complex of ferric salts of organic acid and iron, methyl vinyl ketone, diphenyl ketone, ferrocene and its derivatives, ferric dithiocarbamic acid and its derivatives, and calcium carbonate.

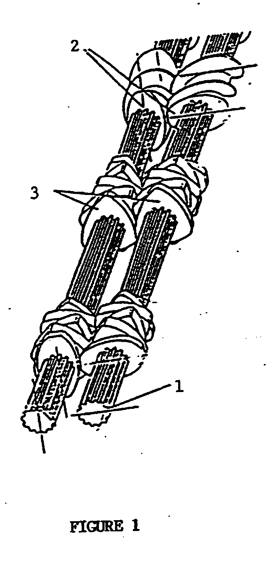

According to a further aspect of the invention, there provides an equipment for preparing the biodegradable starch resin composition, comprising a high-speed mixer, a loss-weightt metering feeder, a controlling system, a double-screw extruder and a pelleting apparatus, wherein, as seen from Figure 1, said double-screw extruder comprises two screws rotating in the same direction, said screw consists of a mandrel 1 with several tooth-type involute and a plurality of screw blocks 2 and a plurality of kneading blocks 3, characterized in that a feeding area, a melting-blending area, a blending-shearing area, a blending-kneading area, a plasticizing-propelling area and a pressure-increasing extruding area are successively formed along with the mandrel of said screws, wherein said feeding area and pressure-increasing area include a plurality of screw blocks, said melting-blending area, blending-shearing area, blending-kneading area and plasticizing-propelling area include a plurality of kneading blocks and a few screw blocks. In each area mentioned above, the angle between the adjacent kneading blocks is larger than 0. The ratio of length to diameter of said screw is in the range of 44-48:1.

Said feeding area comprises at least 10 screw blocks, and the screw pitch is in the range of 40-120mm. Said melting-blending area comprises at least 5 kneading blocks and at least 1 screw block. The angle between the adjacent kneading blocks is 45°, and the thickness of each kneading block is 30mm. The thickness of each screw block is 30mm and the screw-pitch is 30mm. Said blending-shearing area comprises at least 1 screw blocks and at least 5 kneading blocks. The thickness of each screw block is 30mm and the screw pitch is 30mm. The thickness of each kneading block is 30mm and the angle between the adjacent kneading blocks is 45°. Said blending-kneading area comprises at least 3 kneading blocks. The angle between the adjacent kneading blocks is 90° and the thickness of each kneading block is at least 80mm. Said plasticizing-propelling area comprises at least 1 kneading block and 2 screw blocks. The angle between the adjacent kneading blocks is 45° and the thickness of each kneading block is 30mm. The thickness of each screw block is 40mm and the screw-pitch is 40mm. Said pressure-increasing extruding area comprises at least 3 screw blocks.. The thickness of each screw block is 80-12mm and the screw-pitch is 80-120mm.

Depending on the different types of the products and different treating capacities, the specific length, diameter and torsional moment of the double-screw extruder of the invention can vary, however the change should be within the range of the above-mentioned ratio of length to diameter and within the range of the above-mentioned torsional moment.

The double-screw extruder of the invention has high power, high rotating rate, great torsional moment, great shear stress, great capacity for materials, small gap between material flows and large ratio of length to diameter, so that the materials can stay longer within the extruder so as to mix and melt thoroughly. Furthermore, in the double-screw extruder of the invention, the camber modeling and various kinds of combination modes of the kneading blocks of the screw make the starch mix thoroughly with other materials such as synthetic resins, therefore, the starch resin composition with high degradability can be obtained.

In order to further test and verify the degradation effect of the degradable starch resin composition of the invention, the pellets produced by the composition of the invention were blown into thin film which was used as ground film(called degradable film hereinafter) in the following tests. The tests were conducted to compare the degradable film with the normal ground film.

### (1) Test on the property of thermal retardation

Using the normal ground film as a control, the ground temperature at the depth of 10cm under the surface of the ground were measured. The open ground temperature and the temperature of the ground which was covered with the degradable film of the invention were also measured. The result was that the difference of the thermal retardation property between the degradable film and the normal film was not significant. Their difference in the ground temperature was in the range of 0-0.4°C. Compared with the open-ground, the effect of thermal retardation of the degradable film was in the range of 0.7-4.4°C in the morning when the sun did not rise and the in the range of 5.5-11.0°C at noon.

### (2) Test on the property of water holding

The water content at the depth from 0-10cm under the surface of the ground was measured, the result showed that the water content was 14.63% in case of the degradable film, 11.99% in case of the normal ground film, and 8.6% in case of the open ground.

### (3) Natural degradation test of the degradable film

### A. Degradation test of the degradable film exposed to the ground surface

After being degraded for 68 days, the ground film cracked into big pieces, with the biggest piece being about 12×10cm² and the smallest piece being about 5×3cm². The strength decreased by 70%.

After being degraded for 96 days, the ground film cracked into pieces of various sizes, with the biggest piece being about 2.5×1.5cm² and the smallest piece being about 0.5×0.3cm². The strength was too weak to be detected.

After being degraded for 124 days, the sizes of the broken pieces did not change greatly, but the pieces became thinner and would crack into much thinner pieces when pressed lightly with hand.

### B. Degradation test of the degradable film buried into the depth of 8cm in soil

After being degraded for 96 days, the surface of the film became wrinkly. There appeared pores of various sizes on the film by the action of microbes in soil. The biggest pore was about 15×12mm² and the smallest was as tiny as pinhole.

After being degraded for 124 days, the amount of pores increased. The biggest pore was about 25×9mm² and the smallest was as tiny as pinhole, moreover, there were many pores in the size of about 1 mm².

After being degraded for 149 days, the amount of pores increased. The biggest pore was about 30×10mm² and pores in a row appeared on some parts of the film.

After being degraded for 188 days, the film became obviously thinner and the amount of pores increased. The biggest pore was about 32×13mm².

As shown from the above tests, the properties of thermal retardation and water holding of the ground film produced by the degradable starch resin composition of the invention have got the effect of the normal film. Furthermore, said film has good natural degradation effect which can not be provided by the normal ground film.

The present invention will be described in further detail with the following examples, which should not be taken as the limitation of the invention.

### Example 1

The degradable starch resin composition was prepared according to the following formula:

| Components | Amount(g) |
|---|---|
| starch | 65 |
| oleic acid | 0.5 |
| glycerin | 4 |
| glycol | 2.5 |
| sodium hydroxide | 1 |
| EAA | 4 |
| EEP | 7.6 |
| LDPE | 13 |
| calcium carbonate | 2 |
| ferrocene | 0.3 |
| zinc stearate | 0.1 |
| total | 100 |

Starch, calcium carbonate, splitting agent and zinc stearate were stirred well by a high-speed stirring machine, and then put into a powder material feeder by a vaccum intaker and was added into a double-screw extruder through a loss-weightt metering feeder. The pelleted material such as LDPE, EAA and EEP was mixed thoroughly by a mixer, and was put into a pelleted material feeder by a vaccum intaker, followed by adding into the double-screw extruder through a loss-weightt metering feeder. The oleic, glycerin, glycol and the solution of sodium hydroxide were mixed thoroughly and the obtained liquid was added into the double-screw extruder through a metering pump. The ratio of length to diameter of the double-extruder was 44:1, the rotating speed was in the range of 100-430rpm, and the torsional moment was in the range of 432-816Nm. The temperature of each area was controlled as follows: the feeding area 130-135°C, the melting-blending area 140-150°C, the blending-shearing area 150-160°C, the blending-kneading area 160-170°C, the plasticizing-propelling area 150-160°C, the pressure-increasing extruding area 140-150°C. The material extruded through the head part was cooled by water first and then by wind. Yellowish to white translucent particles were obtained by a pelletizer, the characteristics of which were described in table 1.

**Table 1**

| appearance | | yellowish, translucent |
|---|---|---|
| water content | % | 0.8-1.5 |
| grain size | % | 98% through No.4 mesh |
| melt index | g/10min | 0.8-1.5 |
| density | g/cm³ | 1.05-1.08 |
| impurity | | <5/cm³ |
| tensile strength (longitudinal/transversal) | Mpa | >10.0 |
| elongation at break (longitudinal/transversal) | % | >140 |
| rightangle tearing strength | Mpa | >40 |

### Example 2

The degradable starch resin composition was prepared according to the following formula:

| Components | Amount(g) |
|---|---|
| starch | 52 |
| oleic acid | 1 |
| glycerin | 4 |
| glycol | 3.5 |
| soybean oil | 0.5 |
| sodium hydroxide | 1.8 |
| EAA | 5.5 |
| EEP | 10 |
| LDPE | 17.5 |
| talcum powder | 3.5 |
| ferrocene | 0.3 |
| calcium stearate | 0.1 |
| total | 100 |

In a similar manner as described in Example 1, starch, talcum powder, splitting agent, calcium stearate were put into a high-speed stirring machine. Then oleic acid, glycerin, glycol, soybean oil and the solution of sodium hydroxide were separately added into the stirring machine, started to stir until the materials were stirred thoroughly and gave out heat. Then the well mixed materials were fed into viscous material feeder by a vaccum intaker, and were added into a double-screw extruder through a loss-weightt metering feeder. The pelleted materials such as LDPE, EAA, EEP and the like were mixed by a mixer thoroughly and were put into a pelleted material feeder by a vaccum intaker, followed by adding into the double-screw extruder through a loss-weightt metering feeder. The ratio of length to diameter of the double-extruder was 44:1, the rotating speed was in the range of 100-430rpm, and the torsional moment was in the range of 432-1008Nm. The temperature of each area was controlled as follows: the feeding area 130-140°C, the melting-blending area 140-150°C, the blending-shearing area 150-160°C, the blending-kneading area 160-170°C, the plasticizing-propelling area 150-160°C, the pressure-increasing extruding area 140-150°C. The material extruded through the head part was cooled by water first and then by wind. Yellowish to white translucent particles were obtained by a pelletizer, the characteristics of which were described in table 1.

### Example 3

The degradable starch resin composition was prepared according to the following formula:

| Components | Amount(g) |
|---|---|
| starch | 40 |
| oleic acid | 1.8 |
| glycerin | 6 |
| sorbitol | 4.5 |
| triethanolamine | 1 |
| EAA | 8 |
| EEP | 15 |
| LDPE | 23 |
| ferrocene | 0.3 |
| calcium sterate | 0.1 |
| total | 100 |

In the same manner as described in Example 1, except the change of some individual components and amount, yellowish to white translucent particles were obtained.

### Example 4

The degradable starch resin composition was prepared according to the following formula:

| Components | Amount(g) |
|---|---|
| starch | 28 |
| oleic acid | 1.5 |
| glycerin | 3 |
| sorbitol | 5 |
| soybean oil | 1 |
| EAA | 7 |
| PS | 16 |
| HiPS | 26 |
| PP | 12 |
| talcum powder | 3.5 |
| ferrocene | 0.3 |
| calcium stearate | 0.1 |
| total | 100 |

In the same manner as described in Example 2, except the change of some individual components and amount, yellowish to white translucent particles were obtained.

### Example 5

The degradable starch resin composition was prepared according to the following formula:

| Components | Amount(g) |
|---|---|
| starch | 35 |
| oleic acid | 1.5 |
| glycerin | 3 |
| sorbitol | 6 |
| soybean oil | 1 |
| EAA | 7.5 |
| PS | 12 |
| HiPS | 22 |
| PP | 10 |
| ferric stearate | 0.3 |
| calcium stearate | 0.2 |
| calcium carbonate | 1.5 |
| total | 100 |

In the same manner as described in Example 2, except the change of some individual components and amount, yellowish to white translucent particles were obtained.

### Example 6

The degradable starch resin composition was prepared according to the following formula:

| Components | Amount(g) |
|---|---|
| starch | 70 |
| oleic acid | 1.0 |
| glycerin | 1.5 |
| sorbitol | 3 |
| soybean oil | 0.4 |
| EAA | 4 |
| HiPS | 14 |
| PP | 6 |
| calcium stearate | 0.1 |
| total | 100 |

In the same manner as described in Example 1, except the change of some individual components and amount, yellowish to white translucent particles were obtained.

### Example 7

The degradable starch resin composition was prepared according to the following formula:

| Components | Amount(g) |
|---|---|
| starch | 30 |
| oleic acid | 3 |
| glycerin | 4 |
| sorbitol | 5.5 |
| EAA | 6.5 |
| PS | 48 |
| HiPS | 2 |
| ferric acetylaceton | 0.3 |
| calcium stearate | 0.2 |
| talcum powder | 0.5 |
| total | 100 |

Oleic acid, glycerin, sorbitol were mixed into a uniform liquid. The resultant liquid mixture was added through a metering pump into a double-screw extruder having the following parameters: the ratio of length to diameter being 44:1, the rotating speed being in the range of 280-380rpm, and the torsional moment being in the range at 432-1008Nm. At the same time, starch, PS, HiPS, EAA, ferric acetylaceton, calcium stearate and talcum powder were also added into the double-screw extruder. The temperature of each area was controlled as follows: the feeding area 140-150°C, the melting-blending area 150-160°C, the blending-shearing area 160-170°C, the blending-kneading area 170-175°C, the plasticizing-propelling area 160-170°C, the pressure-increasing extruding area 160-150°C. The material extruded through the head part was cooled by water first and then by wind. Yellowish to white translucent particles were obtained by a pelletizer, the characteristics of which were described in table 2.

**Table 2**

| water content | % | 0.604 |
|---|---|---|
| melt index | g/10minutes | 2.96 |
| density | g/cm³ | 1.03 |
| longitudinal tensile strength | Mpa | 1.71 |
| transversal tensile strength | Mpa | 0.97 |
| longitudinal elongation at break | % | 7.2 |
| transversal elongation at break | % | 4.9 |
| dimensional stability | % | -0.73(70°C) -0.25(-40°C) |
| evaporites | mg/L | 8.75 |
| consumption of sodium permanganate | mg/L | 4.9 |
| heavy metals | mg/L | 1 |
| decolorizing test | | negative |
| 10kg load-bearing of product | | acceptable |
| folding times of product | | acceptable |

### Example 8

The degradable starch resin composition was prepared according to the following formula:

| Components | Amount(g) |
|---|---|
| starch | 40 |
| oleic acid | 1 |
| glycerin | 3.8 |
| soybean oil | 0.3 |
| sorbitol | 5 |
| EAA | 5 |
| ferric acetylaceton | 0.3 |
| calcium stearate | 0.1 |
| talcum powder | 1.5 |
| LDPE | 3.5 |
| PP | 30 |
| AC foaming agent | 8 |
| DCP cross-linking agent | 1 |
| divinylbenzene | 0.5 |
| total | 100 |

Oleic acid, glycerin, soybean oil, sorbitol and divinylbezene were mixed into a uniform liquid. The resultant liquid mixture was added through a metering pump into a double-screw extruder having the following parameters: the ratio of length to diameter being 44:1, the rotating speed being in the range of 300-400rpm, and the torsional moment being in the range of 432-1008Nm. At the same time, starch, EAA, ferric acetylaceton, calcium stearate, talcum powder, LDPE, PP, AC foaming agent and DCP cross-linking agent were also added into the double-screw extruder. The temperature of each area was controlled as follows: the feeding area 100-115°C, the melting-blending area 115-125°C, the blending-shearing area 125-135°C, the blending-kneading area 135-145°C, the plasticizing-propelling area 125-135°C, the pressure-increasing extruding area 125-115°C. Thus yellowish or white foaming particles were obtained.

### Example 9

The degradable starch resin composition was prepared according to the following formula:

| Components | Amount(g) |
|---|---|
| starch | 30 |
| oleic acid | 1 |
| glycerin | 4 |
| soybean oil | 1 |
| HiPS | 6 |
| EAA | 5.5 |
| ferric acetylaceton | 0.3 |
| calcium stearate | 0.2 |
| talcum powder | 1 |
| LDPE | 51 |
| total | 100 |

Through a metering pump and a loss-weightt metering feeder, the liquid mixture of oleic acid, glycerin and soybean oil, and the solid mixture of starch, HiPS, EAA, ferric acetylaceton, calcium stearate, talcum powder and LDPE were separately added into the same double-screw extruder as described in Example 8. Yellowish or white particles were obtained with the temperature of each area being controlled the same as described in Example 8. Physical foaming products were produced by the resultant particles, employing central-injection screw-extrusion foaming method.

### Example 10

The degradable starch resin composition was prepared according to the following formula:

| Components | Amount(g) |
|---|---|
| starch | 30 |
| oleic acid | 1 |
| glycerin | 4 |
| sorbitol | 5 |
| HiPS | 6 |
| EAA | 4 |
| ferric acetylaceton | 0.3 |
| calcium stearate | 0.2 |
| talcum powder | 0.5 |
| LDPE | 42 |
| AC foaming agent | 6 |
| ZnO | 1 |
| total | 100 |

Through a metering pump and a loss-weightt metering feeder, the liquid mixture of oleic acid, glycerin and sorbitol, and the solid mixture of starch, HiPS, EAA, ferric acetylaceton, calcium stearate, talcum powder, LDPE, AC foaming agent and ZnO were separately added into the same double-screw extruder as described in Example 8. Yellowish or white particles were obtained with the temperature of each area being controlled the same as described in Example 8. Physical foaming products were produced by the resultant particles, employing screw-extrusion free foaming method.

## Claims

1. A biodegradable starch resin composition, obtainable by a process comprising the steps of:
(1) preparing a mixture comprising 3-5 % by weight of self-oxidant, 3-8 % by weight of polyols, 0-1 % by weight of alkaline additive, and 0-2 % by weight of surfactant, controlling the pH value of the mixture in the range of 10-12.5; and
(2) through a metering pump and a loss-weight metering feeder, adding the mixture obtained in step (1) and 25-75 % by weight of starch, 10-45 % by weight of synthetic resin, 0-15 % by weight of mixing promoter and 1-2 % by weight of splitting agent into a double-screw extruder comprising screw blocks under such conditions that the rotating rate of the screw is in the range of 100-600 rpm and the torsional moment is in the range of 432-4042 Nm, the mixture passing through a feeding area at a temperature of 90-145 °C, a melting-blending area at a temperature in the range 120-165°C, a blending-shearing area at temperature in the range of 130-190 °C, a blending-kneading area at a temperature in the range of 120-180 °C, a plasticizing-piopelling area at a temperature in the range of 110-170 °C and a pressure-increasing extruding area at a temperature in the range of 110-180°C of the double-screw extruder.

2. The composition according to claim 1, wherein the starch is normal industrial starch with a grain size larger than 100 mesh, including corn starch, potato starch, sweet potato starch, cassava starch, modified starch, amylose, amylopectin and normal starch.

3. The composition according to claim 1 or 2, wherein the synthetic resin is selected from polyester, polyether, polyacrylate, polyolefin, substituted polyolefin and/or a polyvinyl resin with a density of 0.86-0.90 g/cm³ and a melt index of 2-8 g/10 minutes.

4. The composition according to one of the preceding claims, wherein the mixing promoter is selected from a copolymer of ethylene and acrylic acid, wherein the acrylic acid content thereof is in the range of 5-20 % and the melt index is in the range of 35± 5 g/10 minutes and organic acids and organic acid esters with polar groups or non-polar groups.

5. The composition according to claim 4, wherein the organic acid is selected from stearic oil, corn oil, epoxy soybean oil and oleic acid.

6. The composition according to one of the preceding claims, wherein the self-oxidant is selected from the group consisting of organic acids and oils.

7. The composition according to claim 5, wherein the organic acid is selected from oleic acid, stearic acid and citric acid, and the oils from corn oil, epoxy vegetable oil and soybean oil.

8. The composition according to one of the preceding claims, wherein the polyols are selected from glycol, glycerol, sorbitol and low molecular weight condensates thereof.

9. The composition according to one of the preceding claims, wherein the alkaline additive is selected from sodium hydroxide, ammonium hydroxide, urea or triethanolamine.

10. The composition according to one of the preceding claims, wherein the surfactant comprises ionic and non-ionic surfactants.

11. The composition according to claim 9, wherein the ionic surfactant is selected from alkyl sulfonates and alkylbenzene sulfonates, and the non-ionic surfactant is selected from fatty acid polyoxyethylene esters and alkylphenol polyoxyethylene ethers.

12. The composition according to one of the preceding claims, wherein the splitting agent is selected from an organic complex of ferric salts of organic acid and iron, methyl vinyl ketone, diphenyl ketone, ferrocene and its derivatives, ferric dithiocarbamic acid and its derivatives and calcium carbonate.

13. The composition according to one of the preceding claims, comprising a processing aid selected from the group consisting of a lubricating agent, calcium stearate, zinc stearate and talcum powder, foaming agent and cross linking agent.

14. The composition according to one of the preceding claims, wherein the ratio of length to diameter of said screw extruder is in the range of 44-48:1.

15. A process for preparing a biodegradable starch resin composition comprising the steps of:
(1) preparing a mixture comprising 3-5 % by weight of self-oxidant, 3-8 % by weight of polyols, 0-1 % by weight of alkaline additive, and 0-2 % by weight of surfactant, controlling the pH value of the mixture in the range of 10-12.5; and
(2) through a metering pump and a loss-weight metering feeder, adding the mixture obtained in step (1) and 25-75 % by weight of starch, 10-45 % by weight of synthetic resin, 0-15 % by weight of mixing promoter and 1-2 % by weight of splitting agent into a double-screw extruder comprising screw blocks under such conditions that the rotating rate of the screw is in the range of 100-600 rpm and the torsional moment is in the range of 432-4042 Nm, the mixture passing through a feeding area at a temperature of 90-145 °C, a melting-blending area at a temperature in the range 120-165 °C, a blending-shearing area at temperature in the range of 130-190 °C, a blending-kneading area at a temperature in the range of 120-180°C, a plasticizing-propelling area at a temperature in the range of 110-170°C and a pressure-increasing extruding area at a temperature in the range of 110-180°C of the double-screw extruder.

16. The process according to claim 15, wherein the screw extruder has a ratio of length to diameter of 44 - 48:1.

17. Use of a double-screw extruder for performing the process according to claim 15 or 16, the double-screw extruder comprising two screws rotating in the same direction, each screw consisting of a mandrel (1) with several tooth-type involutes and a plurality of screw blocks and a plurality of kneading blocks, wherein the feeding area includes a plurality of screw blocks, the melting-blending area, the blending-shearing area, the blending-kneading area, the plasticizing-propelling area, each include a plurality of kneading blocks and a few screw blocks, wherein in each area the angle between the adjacent kneading blocks is larger than 0, and a pressure-increasing extruding area including a plurality of screw blocks, along the mandrel of said screws.

18. Use of a double-screw extruder according to claim 17, wherein the feeding area comprises at least 10 screw blocks and the screw pitch is in the range of 40-120 mm, the melting-blending area comprises at least five kneading blocks and at least one screw block, the angle between the adjacent kneading blocks is 45° and the thickness of each of kneading block is 30 mm, the thickness of each screw block is 30 mm and the screw-pitch is 30 mm; the blending-shearing area comprises at least one screw block and at least five kneading blocks, the thickness of each screw block is 30 mm and the screw pitch is 30 mm, the thickness of each kneading block is 30 mm and the angle between adjacent kneading blocks is 45°; said blending-kneading area comprises at least three kneading blocks, the angle between the adjacent kneading blocks is 90° and the thickness of each kneading block is at least 80 mm; said plasticizing-propelling area comprises at least one kneading block and two screw blocks, the angle between the adjacent kneading blocks is 45° and the thickness of each kneading block is 30 mm, the thickness of each screw block is 40 mm and the screw-pitch is 40 mm; said pressure-increasing extruding area comprises at least three screw blocks, the thickness of each screw block is 80-12 mm and the screw-pitch is 80-120 mm.

19. Use of a double-screw extruder according to claim 18, wherein the ratio of length to diameter of said double-screw extruder is 44-48:1.

## Patentansprüche

1. Biologisch abbaubare Stärkeharzzusammensetzung, zu erhalten durch einen Prozeß, welcher die Schritte aufweist:
(1) Vorbereiten einer Mischung, welche 3-5 Gew.-% Autooxidationsmittel, 3-8 Gew.-% Polyole, 0 - 1 Gew.-% alkalisches Additiv und 0-2 Gew.-% grenzflächenaktives Mittel aulweist, Einstellen des pH-Wertes der Mischung in dem Bereich von 10-12.5; und
(2) durch eine Dosierpumpe und eine Zuführvorrichtung, welche den Gewichtsverlust mißt, Einbringen der Mischung, die in Schritt (1) erhalten worden ist, und 25-75 Gew.-% Stärke, 10-45 % Gew.-% Kunstharz, 0-15 Gew.-% Mischpromotor und 1 - 2 Gew.-% Spaltmittel in einen Doppelschraubenextruder, welcher Schraubenblökke aufweist, unter solchen Bedingungen, daß die Drehzahl der Schrauben in dem Bereich von 100 - 600 Upm ist und das Torsionsmoment in dem Bereich von 432-4042 Nm ist, wobei die Mischung durch einen Zuführbereich mit einer Temperatur von 90-145°C, einen Schmelz-Mischbereich mit einer Temperatur in dem Bereich 120 - 165°C, einen Misch-Scher-Bereich bei einer Temperatur in dem Bereich von 130-190°C, einen Misch-Knet-Bereich mit einer Temperatur in dem Bereich von 120-180°C, einen Plastizier-Vortriebs-Bereich mit einer Temperatur in dem Bereich von 110 - 170°C, und einen Extrudierbereich, in dem der Druck anwächst, mit einer Temperatur in dem Bereich von 110 - 180°C des Doppelschraubenextruders, läuft.

2. Zusammensetzung nach Anspruch 1, bei der die Stärke eine normale industrielle Stärke mit einer Korngröße größer als 100 Mesh ist, einschließlich Maisstärke, Kartoffelstärke, Stärke aus Süßkartoffeln, Cassavastärke, modifizierte Stärke, Amylose, Amylopektin und normale Stärke.

3. Zusammensetzung nach Anspruch 1 oder 2, bei der das Kunstharz aus Polyester, Polyether, Polyacrylat, Polyolefin, substituiertem Polyolefin und/oder einem Polyvinylharz mit einer Dichte von 0.86 - 0.90 g/cm³ und einem Schmelzindex von 2-8 g/10 Minuten ausgewählt ist.

4. Zusammensetzung nach einem der vorangehenden Ansprüche, bei der der Mischpromotor aus einem Copolymer aus Ethylen und Acrylsäure, wobei der Gehalt an Acrylsäure in dem Bereich von 5 - 20 % liegt und der Schmelzindex in dem Bereich von 35 ± 5 g/10 Minuten ist, und organischen Säuren und organischen Säureestern mit polaren Gruppen oder nicht polaren Gruppen ausgewählt ist.

5. Zusammensetzung nach Anspruch 4, bei der die organische Säure aus Stearinöl, Maisöl, Epoxi-Sojabohnenöl und Oleinsäure ausgewählt ist.

6. Zusammensetzung nach einem der vorangehenden Ansprüche, bei der das alkalische Additiv aus Natriumhydroxid, Amoniumhydroxid, Harnstoff oder Triethanolamin ausgewählt ist.

7. Zusammensetzung nach Anspruch 5, bei der die organische Säure aus Oleinsäure, Stearinsäure und Zitronensäure und die Öle aus Maisöl, Epoxypflanzenöl und Sojabohnenöl ausgewählt ist.

8. Zusammensetzung nach einem der vorangehenden Ansprüche, bei der die Polyole aus Glykol, Glycerol, Sorbitol und deren Kondensaten mit niedrigem Molekulargewicht ausgewählt sind.

9. Zusammensetzung nach einem der vorangehenden Ansprüche, bei der das alkalische Additiv aus Natriumhydroxyd, Ammoniumhydroxyd, Harnstoff oder Triethanolamin ausgewählt ist.

10. Zusammensetzung nach einem der vorangehenden Ansprüche, bei der das grenzflächenaktive Mittel ionische und anionische grenzflächenaktive Mittel aufweist.

11. Zusammensetzung nach Anspruch 9, bei der das ionische grenzflächenaktive Mittel aus Alkylsulfonaten und Alkylbenzensulfonaten ausgewählt ist und das nichtionische grenzflächenaktive Mittel aus Fettsäure-Polyoxyethylenestern und Alkylphenol-Polyoxylenethern ausgewählt ist.

12. Zusammensetzung nach einem der vorangehenden Ansprüche, bei der das Spaltmittel aus einem organischen Komplex aus Eisen (III)salzen organischer Säure und Eisen, Methylvinylketon, Diphenylketon, Ferrocen und seinen Derivaten, Eisen (III)-dithiocarbaminsäure und ihren Derivaten und Calciumcarbonat ausgewählt ist.

13. Zusammensetzung nach einem der vorangehenden Ansprüche, welche eine Behandlungshilfe aufweist, die aus der Gruppe bestehend aus einem Schmiermittel, Calciumstearat, Zinkstearat und Talkumpulver, Schäumungsmittel und Vernetzungsmittel ausgewählt ist.

14. Zusammensetzung nach einem der vorangehenden Ansprüche, bei der das Verhältnis von Länge zu Durchmesser des Schraubenextruders in dem Bereich von 44-48:1 liegt.

15. Verfahren zum Herstellen einer biologisch abbaubaren Stärkeharzzusammensetzung, mit den Schritten:
(1) Vorbereiten einer Mischung, welche 3 - 5 Gew.-% Autooxidationsmittel, 3-8 Gew.-% Polyole, 0-1 Gew.-% alkalisches Additiv und 0-2 Gew.-% grenzflächenaktives Mittel aufweist, Einstellen des pH-Wertes der Mischung in dem Bereich von 10-12.5; und
(2) durch eine Dosierpumpe und eine Zuführvorrichtung, welche den Gewichtsverlust mißt, Einbringen der Mischung, die in Schritt (1) erhalten worden ist, und 25 - 75 Gew.-% Stärke, 10 - 45 % Gew.-% Kunstharz, 0-15 Gew.-% Mischpromotor und 1 - 2 Gew.-% Spaltmittel in einen Doppelschraubenextruder, welcher Schraubenblökke aufweist, unter solchen Bedingungen, daß die Drehzahl der Schrauben in dem Bereich von 100 - 600 Upm ist und das Torsionsmoment in dem Bereich von 432 - 4042 Nm ist, wobei die Mischung durch einen Zuführbereich mit einer Temperatur von 90-145°C läuft, durch eine Schmelzmischfläche mit einer Temperatur in dem Bereich 120 - 165°C, einen Misch-Scher-Bereich bei einer Temperatur in dem Bereich von 130 - 190°C, einen Misch-Knet-Bereich mit einer Temperatur in dem Bereich von 120-180°C, einen Plastizier-Vortriebs-Bereich mit einer Temperatur in dem Bereich von 110-170°C, und einen Extrudierbereich, in dem der Druck anwächst, mit einer Temperatur in dem Bereich von 110 - 180°C des Doppelschraubenextruders läuft.

16. Verfahren nach Anspruch 15, bei dem der Schraubenextruder ein Verhältnis von Länge zu Durchmesser von 44-48:1 hat.

17. Verwendung eines Doppelschraubenextruders zum Durchführen des Verfahrens nach Anspruch 15 oder 16, wobei der Doppelschraubenextruder zwei Schrauben aufweist, die sich in dieselbe Richtung drehen, wobei jede Schraube aus einem Dom (1) mit mehreren zahnartigen Involuten und einer Vielzahl von Schraubenblöcken und einer Vielzahl von Knetblöcken besteht, wobei der Zuführbereich eine Vielzahl von Schraubenblöcken umfaßt, der Schmelz-Mischbereich, der Misch-Scher-Bereich, der Misch-Knetbereich, der Plastizier-Vortriebsbereich jeweils eine Vielzahl von Knetblöcken und wenige Schraubenblöcke umfassen, wobei in jedem Bereich der Winkel zwischen den benachbarten Knetblöcken größer als 0 ist, und wobei ein Extrudierbereich, in dem der Druck anwächst, eine Vielzahl von Schraubenblöcken entlang dem Dom der Schrauben umfaßt.

18. Verwendung eines Doppelschraubenextruders nach Anspruch 17, bei dem der Zufuhrbereich wenigstens zehn Schraubenblöcke aufweist und die Gewindesteigung in dem Bereich von 40-120 mm liegt, wobei der Schmelz-Misch-Bereich wenigstens fünf Knetblöcke und wenigstens einen Schraubenblock aufweist, wobei der Winkel zwischen benachbarten Knetblöcken 45° beträgt und die Dicke jedes der Knetblöcke 30 mm ist, die Dicke jedes Schraubenblockes 30 mm ist und die Gewindesteigung 30 mm ist; der Misch-Scher-Bereich wenigstens einen Schraubenblock und wenigstens fünf Knetblöcke aufweist, wobei die Dicke jedes Schraubenblocks 30 mm ist und die Gewindesteigung 30 mm ist, wobei die Dicke jedes Knetblockes 30 mm ist und der Winkel zwischen benachbarten Knetblöcken 45° ist; der Misch-Knet-Bereich wenigstens drei Knetblöcke aufweist, wobei der Winkel zwischen benachbarten Knetblöcken 90° ist und die Dicke jedes Knetblockes wenigstens 80 mm ist; der Plastizier-Wirbel-Bereich wenigstens einen Knetblock und zwei Schraubenblöcke aufweist, wobei der Winkel zwischen den benachbarten Knetblöcken 45° ist und die Dicke jedes Knetblockes 30 mm ist, die Dicke jedes Schraubenblockes 40 mm ist und die Gewindesteigung 40 mm ist; der Extrudierbereich, in dem der Druck ansteigt, wenigstens drei Schraubenblöcke aufweist, wobei die Dicke jedes Schraubenblockes 80 - 12 mm ist und die Gewindesteigung 80-120 mm ist.

19. Verwendung eines Doppelschraubenextruders nach Anspruch 18, bei dem das Verhältnis von Länge zu Durchmesser des Doppelschraubenextruders 44-48:1 beträgt

## Revendications

1. Composition de résine d'amidon biodégradable, que l'on peut obtenir par un procédé comprenant les étapes :
(1) de préparation d'un mélange comprenant 3-5% en poids d'un auto-oxydant, 3-8% en poids de polyols, 0-1% en poids d'un additif alcalin et 0-2% en poids d'agent tensioactif, contrôlant la valeur de pH du mélange dans la gamme de 10-12,5, et
(2) d'introduction, par une pompe de dosage et un dispositif d'alimentation mesureur de perte de poids, du mélange obtenu dans l'étape (1) et de 25-75% en poids d'amidon, de 10-45% en poids de résine synthétique, de 0-15% en poids d'activateur de mélange et de 1-2% en poids d'agent de coupure dans une extrudeuse à double vis comprenant des blocs hélicoïdaux dans des conditions telles que la vitesse de rotation de la vis est de l'ordre de 100-600 tours par minute et le moment de torsion est de l'ordre de 432-4042 Nm, le mélange passant à travers une zone d'alimentation à une température de 90-145°C, une zone de fusion-mélange à une température de l'ordre de 120-165°C, une zone de mélange-cisaillement à une température de l'ordre de 130-190°C, une zone de mélange-pétrissage à une température de l'ordre de 120-180°C, une zone de plastification-propulsion à une température de l'ordre de 110-170°C et une zone d'extrusion augmentant la pression à une température de l'ordre de 110-180°C de l'extrudeuse à double vis.

2. Composition suivant la revendication 1, dans laquelle l'amidon est un amidon industriel normal ayant une taille de grain supérieure à 100 mailles, incluant l'amidon de maïs, de la fécule de pomme de terre, de la fécule de patate douce, de l'amidon de manioc, de l'amidon modifié, de l'amylose, de l'amylopectine et de l'amidon normal.

3. Composition suivant l'une des revendications 1 et 2, dans laquelle la résine synthétique est choisie parmi du polyester, du polyéther, du polyacrylate, de la polyoléfine, de la polyoléfine substituée et/ou une résine polyvinylique ayant une densité de 0,86-0,90 g/cm³ et un indice de fusion de 2-8 g/10 minutes.

4. Composition suivant l'une des revendications précédentes, dans laquelle l'activateur de mélange est choisi parmi un copolymère d'éthylène et d'acide acrylique, dans lequel la teneur en acide acrylique est de l'ordre de 5-20% et l'indice de fusion est de l'ordre de 35 ± 5 g/10 minutes, et des acides organiques et des esters d'acide organique ayant des groupes polaires ou non polaires.

5. Composition suivant la revendication 4, dans laquelle l'acide organique est choisi parmi de l'huile stéarique, de l'huile de maïs, de l'huile de soja époxy et de l'acide oléique.

6. Composition suivant l'une des revendications précédentes, dans laquelle l'auto-oxydant est choisi parmi le groupe constitué des acides organiques et des huiles.

7. Composition suivant la revendication 5, dans laquelle l'acide organique est choisi parmi de l'acide oléique, de l'acide stéarique et de l'acide citrique et les huiles parmi de l'huile de maïs, de l'huile végétale époxy et de l'huile de soja.

8. Composition suivant l'une quelconque des revendications précédentes, dans laquelle les polyols sont choisis parmi du glycol, du glycérol, du sorbitol et leurs produits de condensation à faible poids moléculaire.

9. Composition suivant l'une des revendications précédentes, dans laquelle l'additif alcalin est choisi parmi de l'hydroxyde de sodium, de l'hydroxyde d'ammonium, de l'urée ou de la triéthanolamine.

10. Composition suivant l'une quelconque des revendications précédentes, dans laquelle l'agent tensioactif comprend des agents tensioactifs ioniques et non ioniques.

11. Composition suivant la revendication 9, dans laquelle l'agent tensioactif ionique est choisi parmi des alkyl sulfonates et des alkylbenzène sulfonates, et en ce que l'agent tensioactif non ionique est choisi parmi des esters de polyoxyéthylène d'acide gras et des éthers d'alkylphénol polyoxyéthylène.

12. Composition suivant l'une quelconque des revendications précédentes, dans laquelle l'agent de coupure est choisi parmi un complexe organique de sels ferriques d'acide organique et de fer, de la méthyl vinyl cétone, de la diphényl cétone, du ferrocène et ses dérivés, de l'acide ferrique dithiocarbamique et ses dérivés et du carbonate de calcium.

13. Composition suivant l'une quelconque des revendications précédentes, comprenant un adjuvant de traitement choisi parmi le groupe constitué d'un agent lubrifiant, de stéarate de calcium, de stéarate de zinc et de poudre de talc, d'un agent moussant et d'un agent de réticulation.

14. Composition suivant l'une quelconque des revendications précédentes, dans laquelle le rapport entre la longueur et le diamètre de l'extrudeuse à vis susdite est de l'ordre de 44-48/1.

15. Procédé de préparation d'une composition de résine d'amidon biodégradable comprenant les étapes :
(1) de préparation d'un mélange comprenant 3-5% en poids d'auto-oxydant, 3-8% en poids de polyols, 0-1% en poids d'additif alcalin et 0-2% en poids d'agent tensioactif, contrôlant la valeur de pH du mélange dans la gamme de 10-12,5, et
(2) d'introduction, par une pompe de dosage et un dispositif d'alimentation mesureur de perte de poids, du mélange obtenu dans l'étape (1) et de 25-75% en poids d'amidon, de 10-45% en poids de résine synthétique, de 0-15% en poids d'activateur de mélange et de 1-2% en poids d'agent de coupure dans une extrudeuse à double vis comprenant des blocs hélicoïdaux dans de telles conditions que la vitesse de rotation de la vis est de l'ordre de 100-600 tours par minute et le moment de torsion est de l'ordre de 432-4042 Nm, le mélange passant à travers une zone d'alimentation à une température de 90-145°C, une zone de fusion-mélange à une température de l'ordre de 120-165°C, une zone de mélange-cisaillement à une température de l'ordre de 130-190°C, une zone de mélange-pétrissage à une température de l'ordre de 120-180°C, une zone de plastification-propulsion à une température de l'ordre de 110-170°C et une zone d'extrusion augmentant la pression à une température de l'ordre de 110-180°C de l'extrudeuse à double vis.

16. Procédé suivant la revendication 15, dans lequel l'extrudeuse à vis présente un rapport entre la longueur et le diamètre de 44-48/1.

17. Utilisation d'une extrudeuse à vis double pour effectuer le procédé suivant l'une des revendications 15 et 16, l'extrudeuse à double vis comprenant deux vis tournant dans le même sens, chaque vis étant constituée d'un mandrin (1) à plusieurs développantes de type dent et de plusieurs blocs hélicoïdaux et de plusieurs blocs de pétrissage, la zone d'alimentation comprenant plusieurs blocs hélicoïdaux, la zone de fusion-mélange, la zone de mélange-cisaillement, la zone de mélange-pétrissage, la zone de plastification-propulsion, contenant chacune plusieurs blocs de pétrissage et quelques blocs hélicoïdaux, l'angle entre les blocs de pétrissage adjacents étant dans chaque zone plus grand que 0, une zone d'extrusion augmentant la pression contenant plusieurs blocs hélicoïdaux, le long du mandrin des vis.

18. Utilisation d'une extrudeuse à vis double suivant la revendication 17, dans laquelle la zone d'alimentation comprend au moins dix blocs hélicoïdaux et le pas de vis est de l'ordre de 40-120 mm, la zone de fusion-mélange comprend au moins cinq blocs de pétrissage et au moins un bloc hélicoïdal, l'angle entre les blocs de pétrissage adjacents étant de 45° et l'épaisseur de chaque bloc de pétrissage étant de 30 mm, l'épaisseur de chaque bloc hélicoïdal étant de 30 mm et le pas de vis étant de 30 mm, la zone de mélange-cisaillement comprend au moins un bloc hélicoïdal et au moins cinq blocs de pétrissage, l'épaisseur de chaque bloc hélicoïdal étant de 30 mm et le pas de vis étant de 30 mm, l'épaisseur de chaque bloc de pétrissage étant de 30 mm et l'angle entre des blocs de pétrissage adjacents étant de 45°, la zone de mélange-pétrissage comprend au moins trois blocs de pétrissage, l'angle entre les blocs de pétrissage adjacents étant de 90° et l'épaisseur de chaque bloc de pétrissage étant d'au moins 80 mm, la zone de plastification-propulsion comprend au moins un bloc de pétrissage et deux blocs hélicoïdaux, l'angle entre les blocs de pétrissage adjacents étant de 45° et l'épaisseur de chaque bloc de pétrissage étant de 30 mm, l'épaisseur de chaque bloc hélicoïdal étant de 40 mm et le pas de vis étant de 40 mm, et la zone d'extrusion augmentant la pression comprend au moins trois blocs hélicoïdaux, l'épaisseur de chaque bloc hélicoïdal étant de 80-12 mm et le pas de vis étant de 80-120 mm.

19. Utilisation d'une extrudeuse à vis double suivant la revendication 18, dans laquelle le rapport entre la longueur et le diamètre de l'extrudeuse à vis double est de 44-48/1.
